# EUROPÄISCHE PATENTSCHRIFT

(11) **EP 2 858 194 B1**
(45) Veröffentlichungstag und Bekanntmachung des Hinweises auf die Patenterteilung: **08.09.2021**
(21) Anmeldenummer: 14187314.1
(22) Anmeldetag: 01.10.2014
(51) Int. Cl.: H02H 3/05, H02H 3/06, H02H 3/08, H02J 7/00

(54) **Elektronische Schaltungsanordnung**
Electronic circuit assembly
Circuit électronique

(30) Priorität: 01.10.2013 DE 102013219950
(43) Veröffentlichungstag der Anmeldung: 08.04.2015
(73) Patentinhaber: ecom instruments GmbH, 97959 Assamstadt (DE)
(72) Erfinder: Sack, Norbert, 97922 Lauda-Königshofen (DE)
(74) Vertreter: BRP Renaud & Partner mbB Rechtsanwälte Patentanwälte Steuerberater

(56) Entgegenhaltungen:
- EP-A1- 2 557 581
- EP-A2- 0 222 381
- None

## Beschreibung

Die vorliegende Erfindung betrifft eine elektronische Schaltungsanordnung zur Verwendung in einem explosionsgefährdeten Bereich sowie ein Verfahren zum Betreiben eines elektronischen Geräts mittels einer solchen elektronischen Schaltungsanordnung.

Zur Verwendung von tragbaren elektronischen Geräte in einem explosionsgefährdeten Bereich wie beispielsweise einer Bohrinsel o.ä., existieren elektronische Schaltungen mit sogenannten elektronischen Schutzschaltungen, welche bei einer Funktionsstörung, beispielsweise in der Art eines elektrischen Kurzschlusses, die elektrische Verbindung zwischen einer wiederaufladbaren Batterie, welche das elektronische Gerät mit elektrischer Energie versorgt, dem elektronischen Gerät selbst, unterbrechen. Hierzu kann in der Schaltungsanordnung ein Schaltungselement, beispielsweise in der Art eines Halbleiterschalters vorgesehen sein, welches in einen Sperrzustand geschaltet werden kann, in welchem es die Verbindung zwischen Batterie und elektronischem Gerät unterbricht. Solche elektronische Schaltungen müssen aber auch derart konfiguriert sein, dass sie nach Behebung der Funktionsstörung die elektrische Trennung zwischen Batterie und elektronischem Gerät wieder aufgehoben wird.

Aus der EP 2 557 581 A1 ist eine elektronische Schaltungsanordnung bekannt, welche zum Überladungsschutz bzw. zum Schutz bei Funktionsstörungen einer Batterie beim Aufladen der Batterie mit Hilfe eines Ladegeräts dient. Der Überladungsschutz ist mittels eines Steuerungsschaltkreises realisiert, welcher eine Steuerungseinheit aufweist. Mit Hilfe der Steuerungseinheit können zwei als FETs realisierte Schaltelemente zwischen einem geöffneten und einem geschlossenen Zustand umgeschaltet werden. Im geöffneten Zustand wenigstens eines der beiden Schaltelemente ist eine Versorgungsleitung unterbrochen, so dass keine elektrische Verbindung zwischen dem Ladegerät und der Batterie besteht. Die Steuerungseinheit steuert die beiden Schaltelemente derart an, dass bei Detektion eines Überladungszustands, der mit Hilfe eines Detektionsschaltkreises erfolgen kann, die Schaltelemente in den geöffneten Zustand umgeschaltet werden. Auf diese Weise kann ein Überladen der Batteriezellen der Batterie wirksam unterbunden werden.

Die vorliegende Erfindung beschäftigt sich daher mit dem Problem, bei der Entwicklung von elektronischen Schaltungsanordnungen für elektronische Geräte zur Verwendung in explosionsgefährdeten Bereichen neue Wege aufzuzeigen.

Diese Aufgabe wird durch den Gegenstand der unabhängigen Patentansprüche gelöst. Bevorzugte Ausführungsformen sind Gegenstand der abhängigen Patentansprüche.

Die erfindungsgemäße Schaltungsanordnung umfasst zum einen eine Schutz-Schaltungsanordnung, mittels welcher die elektrische Verbindung zwischen der einer Batterie und dem mit Energie zu versorgenden elektronischen Gerät im Falle eines Fehlerzustands unterbrochen werden kann, und zum anderen Reset-Schaltungsanordnung, mittels welcher die Unterbrechung der elektrischen Verbindung zwischen der Batterie und dem elektronischen Gerät wieder aufgehoben werden kann, wobei beide Schaltungen an ein gemeinsames elektrisches Massepotential angeschlossen sind.

Die hier vorgestellte erfindungsgemäße elektronische Schaltungsanordnung umfasst eine erste elektrische Versorgungsleitung zum Verbinden eines elektronischen Geräts mit einer wiederaufladbaren Batterie, wobei die elektrische Versorgungseinheit einenends mit der wiederaufladbaren elektrischen Batterie verbunden ist und anderenends mit dem elektronischen Gerät zur Versorgung des Geräts mit elektrischer Energie verbindbar oder verbunden ist. In der elektrischen ersten Versorgungsleitung sind wenigstens zwei Schaltelemente, beispielsweise in der Art von Halbleiterschaltern, vorgesehen, welche jeweils zwischen einem geöffneten Zustand - dem sog. Sperrzustand- , in welchem das jeweilige Schaltelement die erste Versorgungsleitung elektrisch unterbricht, und einem geschlossenen Zustand - dem sog. Leitungszustand - umschaltbar sind. Im geöffneten Zustand wenigstens eines Schaltelements wird also die Energieversorgung des elektronischen Geräts mit Energie aus der wiederaufladbaren Batterie unterbrochen.

Die erfindungsgemäße Schaltungsanordnung besitzt auch eine Schutz-Schaltungsanordnung, welche die wenigstens zwei Schaltelemente bei Auftreten einer Fehlfunktion in der wiederaufladbaren Batterie und/oder im elektronischen Gerät in den geöffneten Zustand umschaltet, so dass der elektrische Stromfluss durch die ersten elektrische Versorgungsleitung unterbrochen ist. Mittels einer in der elektronischen Schaltungsanordnung vorgesehenen Reset-Schaltungsanordnung, die derart ausgebildet ist, dass sie im elektrisch unterbrochenen Zustand der ersten elektrischen Versorgungsleitung bei einem Anschließen des elektronischen Geräts an ein externes Ladegerät alle Schaltelemente in den geschlossenen Zustand umschaltet, kann die von der Schutzschaltungsanordnung im Fehlerfall bewirkte elektrische Unterbrechung der ersten elektrischen Versorgungsleitung wieder aufgehoben werden. Dies bedeutet, dass der Anschluss des elektronischen Geräts an das externe Ladegerät zum Aufladen der Batterie als "Auslöser" zum Zurücksetzen der Schaltelemente durch die Schutzschaltungsanordnung in den geöffneten Zustand herangezogen wird.

Durch die erfindungsgemäße, funktionelle Trennung von Schutzschaltungs- und Reset-Schaltungsanordnung lässt sich die Betriebssicherheit der hier vorgestellten Schaltungsanordnung gegenüber herkömmlichen Schaltungsanordnungen deutlich verbessern, so dass sich die Schaltungsanordnung insbesondere zur Verwendung in einem explosionsgefährdeten Bereich eignet.

Bei einer bevorzugten Ausführungsform sind die Reset-Schaltungsanordnung und die Schutz-Schaltungsanordnung an ein gemeinsames elektrisches Massepotential angeschlossen. Auf diese Weise lassen sich die Betriebssicherheit der Schaltungsanordnung unter Umständen einschränkende Potentialunterschiede zwischen Reset-Schaltungsanordnung und Schutz-Schaltungsanordnung vermeiden. Denn etwaige Potentialunterschiede der Massepotentiale von Schutz-Schaltungsanordnung und Reset-Schaltungsanordnung können andernfalls gerade in einem teilweise oder vollständig entladenen Zustand der Batterie dazu führen, dass die von der Batterie bereitgestellte elektrische Energie nicht mehr zu einer hinreichenden Versorgung der Bauelemente mit elektrischer Energie ausreicht, so dass diese nicht mehr ordnungsgemäß arbeiten.

Bei einer bevorzugten Ausführungsform umfasst die Schutz-Schaltungsanordnung einen in der ersten elektrischen Versorgungsleitung vorgesehenen elektrischen Stromsensor, mittels welchem der durch die elektrische Versorgungsleitung fließende elektrische Strom bestimmbar ist. Die Schutz-Schaltungsanordnung wirkt dabei derart mit dem elektrischen Stromsensor und den wenigstens zwei Schaltelementen zusammen, dass sie bei einem mittels des elektrischen Stromsensors festgestellten Überschreiten eines vorbestimmten Schwellstroms die wenigstens zwei Schaltelemente jeweils in den geöffneten Zustand umschaltet, so dass der elektrische Stromfluss durch die erste Versorgungsleitung unterbrochen ist. Es ist klar, dass hierzu grundsätzlich das Umschalten nur eines der beiden elektrisch zueinander in Reihe geschalteten Schaltelemente notwendig ist; aus Redundanzgründen und zur Erhöhung der Betriebssicherheit der elektronischen Schaltungsanordnung, insbesondere zur Verwendung in einem explosionsgefährdeten Bereich, werden jedoch vorzugsweise alle in der elektrischen Versorgungsleitung vorgesehenen Schaltelemente, also wenigstens zwei Schaltelemente, in den geöffneten Zustand umgeschaltet.

Gemäß einer vorteilhaften Weiterbildung kann die Reset-Schaltungsanordnung eine erste Teil-Schaltungsanordnung umfassen, welche eingangsseitig einen elektrischen Signalanschluss aufweist und ausgangsseitig elektrisch jeweils derart mit den wenigstens zwei Schaltelementen verbunden ist und mit diesen zusammenwirkt, dass sie die wenigstens zwei Schaltelemente bei Anliegen eines Reset-Signals am eingangsseitigen Signalanschluss in den geschlossenen Zustand umschaltet. Die erste Teil-Schaltungsanordnung ist als Teil der Reset-Schaltungs-anordnung folglich an das gleiche elektrische Massepotential angeschlossen wie die Schutz-Schaltungsanordnung, was deren Betriebssicherheit weiter verbessert. Die erste Teil-Schaltungsanordnung kann nach Art einer herkömmlichen Schaltung mit verschiedenen analogen elektronischen Bauteilen wie z.B. Transistoren, Widerständen, Kapazitäten usw. realisiert sein, kann aber auch um Logikgatter, Mikroprozessoren und integrierte Schaltkreise (IC) ergänzt sein.

Besonders zweckmäßig kann die Reset-Schaltungsanordnung eine zweite Teil-Schaltungsanordnung umfassen, welche einen Ausgangsanschluss und einen ersten und zweiten Eingangsanschluss aufweist. In Abhängigkeit von den Zuständen der beiden Eingangsanschlüsse wird dabei am Ausgangsanschluss ein bestimmtes elektrisches Ausgangssignal erzeugt. Der Ausgangsanschluss der Teil-Schaltungsanordnung ist zur Ansteuerung der beiden Schaltelemente elektrisch mit dem Signalanschluss der vorangehend vorgestellten ersten Teil-Schaltungs-anordnung verbunden. Der erste Eingangsanschluss der zweiten Teil-Schaltungsanordnung ist nun mit den wenigstens zwei Schaltelementen derart gekoppelt, dass am ersten Eingangsanschluss ein erstes Aktivierungssignal bereitgestellt ist, wenn sich wenigstens eines der Schaltelemente im geöffneten Zustand befindet. Auf diese Weise kann von der zweiten Teil-Schaltungsanordnung detektiert werden, ob die Schutz-Schaltungsanordnung bereits aktiviert wurde und für eine Unterbrechung der elektrischen Verbindung zwischen der wiederaufladbaren Batterie und dem elektronischen Gerät gesorgt hat. Mittels der zweiten Teil-Schaltungsanordnung kann die Reset-Schaltungsanordnung zum Zurücksetzten der Schaltelemente in den geschlossenen Zustand also quasi "scharf" gestellt werden.

Der zweite Eingangsanschluss ist entsprechend derart mit der elektrischen Versorgungsleitung gekoppelt, dass beim Anschließen des elektronischen Geräts an das externe Ladegerät ein zweites Aktivierungssignal bereitgestellt wird. Dies gestattet es der zweiten Teil-Schaltungsanordnung, festzustellen, dass das elektronische Gerät, welches sich nach der Trennung von der Batterie in einem nicht mit elektrischer Energie versorgten Zustand befindet, durch Verbindung mit dem Ladegerät wieder mit Energie versorgt und zurückgesetzt werden kann. Nach einem solchen Zurücksetzten des elektronischen Geräts kann dieses wieder über die elektronische Schaltungsanordnung mit der Batterie verbunden werden. Dazu muss die von der Schutz-Schaltungsanordnung unterbrochene elektrische Verbindung zwischen elektrischem Gerät und Batterie durch Umschalten des Schaltelements in den geschlossenen Zustand wiederhergestellt werden. Hierzu ist die zweite Teil-Schaltungsanordnung nun derart ausgebildet, dass sie bei Bereitstellung des ersten und zweiten Aktivierungssignals an den beiden Eingangsanschlüssen am Ausgangsanschluss das besagte Reset-Signal erzeugt.

Eine vereinfachte Fertigung und flexible Einsatzmöglichkeiten ergeben sich, wenn auch die Schutz-Schaltungsanordnung jeweils eine einem jeden Schaltelement zugeordnete, separate Steuerungseinheit umfasst. Diese kann Teil der zweiten Teil-Schaltungsanordnung sein, wobei jede Steuerungseinheit das ihr zugeordnete Schaltelement bei Feststellen des Überschreitens des vorbestimmten Schwellstroms in der elektrischen Versorgungsleitung durch die Schutz-Schaltungsanordnung in den geöffneten Zustand umschaltet. Gemäß dieser Ausführungsform kann die Schutz-Schaltungsanordnung besonders bevorzugt eine Kopplungseinrichtung aufweisen, welche die wenigstens zwei Steuerungseinheiten derart miteinander koppelt, dass bei einem Umschalten eines bestimmten Schaltelements in dem geöffneten Zustand durch die dem Schaltelement zugeordnete Steuerungseinheit die wenigstens eine verbleibende Steuerungseinheit mittels der Kopplungseinheit derart angesteuert wird, dass diese das der wenigstens einen verbleibenden Steuerungseinheit zugeordnete Schaltelement zeitverzögert ebenfalls in den geöffneten Zustand umschaltet. Auf diese Weise wird verhindert, dass durch unerwünschte elektrische Kopplungseffekte zwischen den Schaltelementen bzw. diesen zugeordneten Steuerungseinheiten eine bereits in den geöffneten Zustand umgeschaltete Schaltungselement auf unerwünschte Weise wieder in den geöffneten Zustand umgeschaltet wird.

Vorzugsweise kann die elektrische Versorgungsleitung mittels einer Spannungsteileranordnung mit einer zweiten Versorgungsleitung der wiederaufladbaren Batterie verbunden sein. Die Spannungsteilerschaltung kann dabei eine elektrische Reihenschaltung mit einem ersten und einem zweiten elektrischen Widerstand aufweisen, wobei zwischen den beiden elektrischen Widerständen ein Anschlusselement vorgesehen ist, welches elektrisch mit dem zweiten Eingangsanschluss verbunden ist. Für den Fall, dass das elektronische Gerät an das externe Ladegerät angeschlossen wird, wirkt die Spannungsteilerschaltung derart, dass am zweiten Eingangsanschluss ein Niederspannungssignal anliegt. Dieses wird von der zweiten Teil-Schaltungsanordnung als Reset-Signal zum Umschalten der Schaltelemente in den geöffneten Zustand interpretiert. Denn für den Fall, dass im geöffneten Zustand der beiden Schaltelemente kein externes Ladegerät an das elektronische Gerät und somit an die elektronische Schaltungsanordnung angeschlossen ist, weist der zweite elektrische Widerstand aufgrund der unterbrochenen ersten elektrischen Versorgungsleitung kein definiertes elektrisches Potential auf. In diesem Fall fällt am zweiten elektrischen Widerstand zwischen Anschlusselement keine elektrische Spannung ab. Sobald jedoch das externe Ladegerät an die beiden Versorgungsleitungen angeschlossen wird, kann ein elektrischer Strom durch die beiden Widerstände fließen, so dass an diesen im Sinne eines Spannungsteilers entsprechend ihrer Dimensionierung eine jeweilige elektrische Teil-Spannung abfällt, was zu einer Absenkung des elektrischen Potentials im Anschlusspunkt zwischen den beiden Widerständen führt. Das Anschließen des elektronischen Geräts an die beiden Versorgungsleitungen führt also zur Reduktion des elektrischen Potentials im Anschlusspunkt von einem "High"-Pegel auf einen "Low"-Pegel, sobald das externe Ladegerät an die beiden Versorgungsleitungen angeschlossen wird.

Bevorzugt kann der erste elektrische Widerstand 1 MΩ und der zweite elektrische Widerstand 1 kΩ betragen. Selbstverständlich sind in Varianten aber auch andere geeignete Werte möglich.

Zur weiteren Verbesserung der Betriebssicherheit der elektronischen Schaltungsanordnung können in der elektrischen Versorgungsleitung genau drei elektrisch in Reihe geschaltete Schaltelemente vorgesehen sein.

Besonders bevorzugt sind die wenigstens zwei Schaltelemente jeweils als Feldeffekttransistoren ausgebildet, wobei die erste Teil-Schaltungsanordnung zum Umschalten der Feldeffekttransistoren zwischen dem geöffneten und dem geschlossenen Zustand elektrisch jeweils mit einem Gate-Anschluss der Feldeffekttransistoren verbunden ist. Der geöffnete Zustand des Schaltelements entspricht einem Sperrzustand des Feldeffekt-Transistors, der geschlossenen Zustand des Schaltelements einem leitenden Zustand.

Die Erfindung betrifft ferner ein Verfahren zum Betreiben eines elektronischen Geräts, gemäß welchem eine elektronische Schaltungsanordnung mit einer elektrischen Versorgungsleitung zum Verbinden eines elektronischen Geräts mit einer wiederaufladbaren Batterie bereitgestellt wird, wobei die elektrische Versorgungsleitung einenends mit der wiederaufladbaren elektrischen Batterie verbunden ist und anderenends mit dem elektronischen Gerät zur Versorgung mit elektrischer Energie aus der wiederaufladbaren Batterie verbindbar oder verbunden ist. In der elektrischen Versorgungsleitung sind wenigstens zwei Schaltelemente vorgesehen, wobei wenigstens eines der Schaltelemente bei Überschreiten eines vorbestimmten elektrischen Schwellstroms in der elektrischen Versorgungsleitung mittels einer Schutz-Schaltungsanordnung in einen geöffneten Zustand umgeschaltet wird, in welchem die elektrische Versorgungsleitung unterbrochen ist. Gemäß dem Verfahren werden nun mittels einer Reset-Schaltungsanordnung, welche vorzugsweise an dasselbe elektrische Massepotential angeschlossen wie die Schutzschaltungsanordnung ist, beim Anschließen des elektronischen Geräts ein externes Ladegeräts alle Schaltelemente in den geschlossenen Zustand umgeschaltet, so dass die elektrische Unterbrechung in der elektrischen Versorgungsleitung wieder aufgehoben wird.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

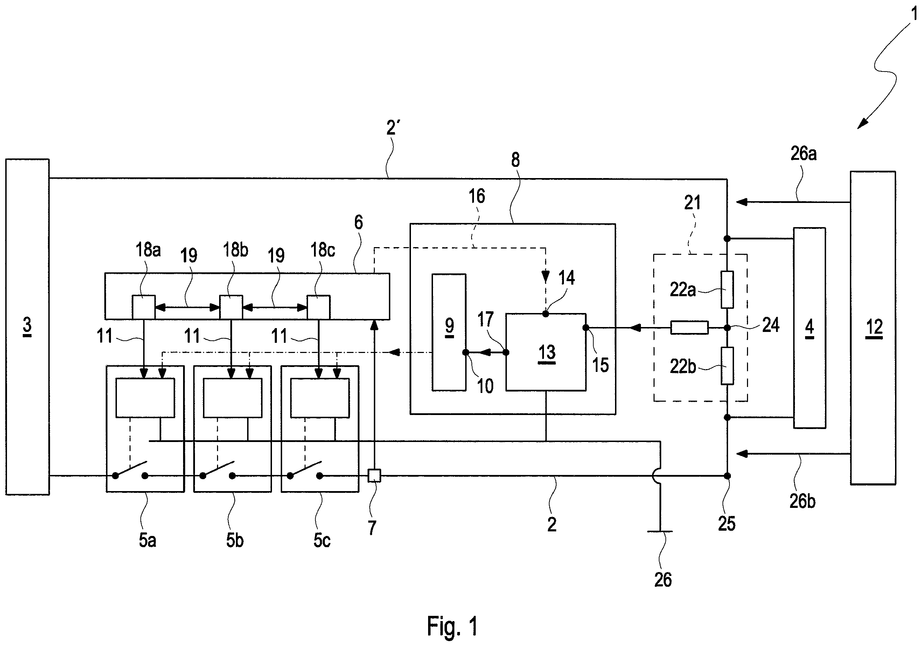

In der Figur 1 ist eine erfindungsgemäße elektronische Schaltungsanordnung in einer schaltplanartigen Darstellung gezeigt und mit 1 bezeichnet. Die elektronische Schaltungsanordnung 1 umfasst eine erste und eine zweite elektrische Versorgungsleitung 2, 2', mittels welcher eine wiederaufladbare Batterie 3 über die elektronische Schaltungsanordnung 1 mit einem elektronischen Gerät 4 verbunden wird, um dieses mit elektrischer Energie aus der Batterie 3 zu versorgen. Hierzu ist die elektrische Versorgungsleitung 2 einenends mit der wiederaufladbaren Batterie 3 und anderenends mit dem elektronischen Gerät 4 verbunden. Zum Aufladen der Batterie 3 kann diese im Bedarfsfall über die Versorgungsleitungen 2, 2' auch mit einem externen Ladegerät 12 verbunden werden.

In der ersten elektrischen Versorgungsleitung 2 sind wenigstens zwei Schaltelemente 5a, 5b, 5c vorgesehen, welche jeweils zwischen einem geöffneten Zustand, in welchem das jeweilige Schaltelement 5a, 5b, 5c die Versorgungsleitung 2 elektrisch unterbricht, und einem geschlossenen Zustand umschaltbar ist, in welchem die elektrische Verbindung zwischen der wiederaufladbaren Batterie 2 und dem elektronischen Gerät 4 hergestellt ist. In der Figur 1 sind exemplarisch drei solche Schaltelemente 5a, 5b, 5c gezeigt. Diese können als Halbleiterbauelemente, beispielsweise in der Art von Feldeffekttransistoren ausgebildet sein. Der geöffnete Zustand eines Schaltelements 5a, 5b, 5c entspricht dann einem Sperrzustand des Transistors, der geschlossene Zustand des Schaltelements 5a, 5b, 5c einem leitenden Zustand des Transistors.

Die elektronische Schaltungsanordnung 1 umfasst nun eine Schutz-Schaltungsanordnung 6, welche die wenigstens zwei Schaltelemente 5a, 5b, 5c bei Auftreten einer Fehlfunktion in der wiederaufladbaren Batterie 3 und/oder im elektronischen Gerät 4 in den in der Figur 1 schematisch gezeigten geöffneten Zustand schaltet, so dass der elektrische Stromfluss durch die elektrische Versorgungsleitung 2 unterbrochen wird. Hierzu kann die Schutz-Schaltungsanordnung einen in der elektrischen Versorgungsleitung 2 vorgesehenen elektrischen Stromsensor 7 umfassen, mittels welchem der durch die elektrische Versorgungsleitung 2 fließende elektrische Strom bestimmt werden kann. Die Schutz-Schaltungsanordnung 6 wirkt nun mit dem elektrischen Stromsensor 7 und den Schaltelementen 5a, 5b, 5c derart zusammen, dass bei Überschreiten eines vorbestimmten elektrischen Schwellstroms in der Versorgungsleitung 2 die Schaltelemente 5a, 5b, 5c in den geöffneten Zustand umgeschaltet werden, wodurch der elektrische Stromfluss durch die elektrische Versorgungsleitung 2 vollständig unterbrochen wird. Auf diese Weise kann ein Fließen unzulässig hoher elektrischer Ströme bzw. eine Bereitstellung zu großer elektrischer Energien, welche in einem explosionsgefährdeten Bereich die Gefahr einer Glüh- oder Funkenzündung mit sich bringt, in den beiden elektrischen Versorgungsleitungen 2, 2' verhindert werden.

Die Schutz-Schaltungsanordnung 6 ist derart konfiguriert, dass sie eine elektrische Verbindung zwischen der Batterie 2 und dem elektronischen Gerät 4 auch dann unterbricht, wenn im elektronischen Gerät 4 eine Fehlfunktion, beispielsweise in der Art eines elektrischen Kurzschlusses auftritt, welcher zu besagtem, unzulässig hohem elektrischen Strom in der elektrischen Versorgungsleitung 2 führen würde.

Um nun die Schutz-Schaltungsanordnung 6 nach Beseitigung eines Fehlerzustands - beispielsweise in Form eines elektrischen Kurzschlusses - im elektronischen Gerät 4 wieder zurückzusetzen, so dass das elektronische Gerät 4 wieder elektrischer Energie aus der Batterie 3 versorgt werden kann, umfasst elektronische Schaltungsanordnung 1 eine Reset-Schaltungsanordnung 8. Diese hebt den elektrisch unterbrochenen Zustand der elektrischen ersten Versorgungsleitung 2 auf, sobald das elektronische Geräts 4 an ein externes Ladegerät 12 angeschlossen wird. Hierzu schaltet es die Schaltelemente 5a, 5b, 5c wieder in den geschlossenen Zustand um. Die Reset-Schaltungsanordnung 8 und die Schutz-Schaltungsanordnung 6 sind bevorzugt an ein gemeinsames elektrisches Massepotential 26 angeschlossen.

Gemäß der im Beispiel der Figur 1 vorgestellten technischen Realisierung kann die Reset-Schaltungsanordnung 8 eine erste Teil-Schaltungsanordnung 9 umfassen, welche eingangsseitig einen elektrischen Signalanschluss 10 aufweist und ausgangsseitig über eine elektrische Signalleitung 11 mit den Schaltelementen 5a, 5b, 5c verbunden ist und mit diesen derart zusammenwirkt, dass die Schaltelemente 5a, 5b, 5c bei Anliegen eines Reset-Signals am Signalanschluss 10 in den geschlossenen Zustand umgeschaltet werden, so dass die elektrische Verbindung zwischen Batterie 3 und elektronischem Gerät 4 wieder hergestellt ist.

Das Reset-Signal zum Schließen der Schaltelemente 5a, 5b, 5c wird von der ersten Teil-Schaltungsanordnung 9 nur dann erzeugt, wenn sich die Schaltelemente 5a, 5b, 5c im geöffneten Zustand befinden und das elektronische Gerät 4 in diesem Zustand der Schaltelemente 5a, 5b, 5c elektrisch mit einem externen Ladegerät 12 verbunden wird. Die hierzu erforderliche Schaltungslogik ist in einer zweiten Teil-Schaltungsanordnung 13 der Reset-Schaltungsanordnung 8 realisiert.

Wie Figur 1 im Einzelnen erkennen lässt, besitzt die zweite Teil-Schaltungsanordnung 13 einen ersten und einen zweiten Eingangsanschluss 14, 15. Der erste Eingangsanschluss 14 ist über eine Signalleitung 16 mit der Schutz-Schaltungsanordnung 6 und über diese indirekt mit den Schaltelementen 5a, 5b, 5c derart gekoppelt, dass am ersten Eingangsanschluss 14 ein erstes Aktivierungssignal bereitgestellt wird, wenn sich wenigstens eines der Schaltelemente 5a, 5b, 5c in dem in der Figur 1 gezeigten geöffneten Zustand befindet. Dies bedeutet, dass ein Fehlerzustand im elektronischen Gerät 4 oder in der Batterie 3 vorgelegen hat. In einer vereinfachten Variante kann die Kopplung des ersten Eingangsanschlusses 14 über eine geeignet ausgestaltete Signalleitung auch direkt mit den Schaltelementen 5a, 5b, 5c erfolgen.

Der zweite Eingangsanschluss 15 der zweiten Teil-Schaltungsanordnung 13 ist nun derart mit der elektrischen Versorgungsleitung 2 gekoppelt, dass beim Anschließen des elektronischen Geräts 4 an das externe Ladegerät 12 ein zweites Aktivierungssignal bereitgestellt wird. In der zweiten Teil-Schaltungsanordnung 13 ist hierfür eine Schaltungslogik realisiert, welche das Reset-Signal zum Umschalten der Schaltelemente 5a, 5b, 5c in den geschlossenen Zustand nur dann erzeugt, wenn sowohl das zweite als auch das erste Aktivierungssignal anliegt. Das Reset-Signal wird dabei an einem Ausgangsanschluss 17 der zweiten Teil-Schaltungsanordnung 13 bereitgestellt, der elektrisch mit dem Signalanschluss 10 der ersten Teil-Schaltungsanordnung 9 verbunden ist, und - wie bereits vorangehend erläutert - von der ersten Teil-Schaltungsanordnung 9 weiterverarbeitet.

Zur Detektion eines an das elektronische Gerät 4 angeschlossenen externen Ladegeräts 12 umfasst die elektronische Schaltungsanordnung 1 eine Spannungsteilerschaltung 21. Von der Spannungsteilerschaltung 21 wird am zweiten Eingangsanschluss 15 das zweite Aktivierungssignal erzeugt, wenn das elektronische Gerät 4 mit dem externen Ladegerät 12 verbunden wird. Hierzu ist die Spannungsteilerschaltung 21 in Form einer elektrischen Reihenschaltung mit einem ersten und einem zweiten ohmschen Widerstand 22a, 22b zwischen den beiden Versorgungsleitungen 2, 2' realisiert, wobei zwischen den Widerständen 22a, 22b ein Anschlusselement 24 vorgesehen ist, welches elektrisch mit dem zweiten Eingangsanschluss 15 der zweiten Teil-Schaltungsanordnung 13 verbunden ist. Der erste elektrische Widerstand 22a kann beispielsweise 1 MΩ betragen, der elektrische Widerstand beispielsweise 1 kΩ; es ist klar, dass in einer Variante jedoch auch andere, geeignete Werte möglich sind.

Für den Fall, dass die Schutz-Schaltungsanordnung 6 die Schaltelemente 5a, 5b, 5c in den geöffneten Zustand umgeschaltet hat, ist der mit 25 bezeichnete Punkt der zweiten elektrischen Versorgungsleitung potentialfrei, solange das externe Ladegerät 12 nicht über die Spannungsteilerschaltung 21 mit dem elektronischen Gerät 4 verbunden ist.

Folglich fällt am zweiten elektrischen Widerstand 22b keine elektrische Spannung ab, so dass die gesamte von der Batterie 3 über die Versorgungsleitung 2' bereitgestellte Versorgungsspannung am zweiten Eingangsanschluss 15 in Form eines "High-Pegel"-Signals zur Verfügung steht.

Zum Aufladen der Batterie 3 kann das externe Ladegerät 12 über seine beiden Versorgungsleitungen 26a, 26b mit den elektrischen Versorgungsleitungen 2, 2' der elektronischen Schaltungsanordnung 1 verbunden werden. In diesem Fall besitzt auch der Punkt 25 ein definiertes elektrisches Potential, und am zweiten ohmschen Widerstand 22b fällt eine elektrische Spannung ab, so dass der elektrische Spannungspegel am zweiten Eingangsanschluss 15 reduziert wird. Ein solches Abfallen des Spannungspegels von einem High-Pegel- Signal auf Low-Pegel-Signal entspricht dem Erzeugen des zweiten Aktivierungssignals am zweiten Eingangsanschluss 15 der zweiten Teil-Schaltungsanordnung 13 der Reset-Schaltungsanordnung 8.

Gemäß dem in der Figur 1 gezeigten Beispiel kann die Schutz-Schaltungsanordnung 6 nun jeweils eine einem jeden Schaltelement 5a, 5b, 5c zugeordnete, separate Steuerungseinheit 18a, 18b, 18c umfassen. Jede Steuerungseinheit 18a, 18b, 18c schaltet das ihr zugeordnete Schaltelement 5a, 5b, 5c bei Feststellen des Überschreitens des vorbestimmten Schwellstroms mit der elektrischen Versorgungsleitung 2 durch die Schutz-Schaltungsanordnung 6 in den geöffneten Zustand um. Die Schutz-Schaltungsanordnung 6 kann nun eine Kopplungseinrichtung 19 aufweisen, welche in der Figur 1 schematisch durch Pfeile mit den Bezugszeichen 19 dargestellt ist. Die Kopplungseinrichtung 19 koppelt die Steuerungseinheiten 18a, 18b, 18c derart miteinander, dass bei einem Umschalten eines bestimmten Schaltelements, beispielsweise des Schaltelements 5a, in den geschlossenen Zustand, durch die dem Schaltelement 5a zugeordnete Steuerungseinheit 18a die verbleibenden Steuerungseinheiten 18b, 18c mittels der Kopplungseinrichtung 19 derart angesteuert wird, dass diese das den verbleibenden Steuerungseinheiten 18b, 18c zugeordnete Schaltelement 5b, 5c zeitverzögert ebenfalls in den geschlossenen Zustand umschalten. Auf diese Weise können etwaige Synchronisationsprobleme beim Rücksetzen der Schaltelemente 5a, 5b, 5c dahingehend verhindert werden, dass das Umschalten eines einzelnen Schaltelements - etwa 5a - in den geschlossenen Zustand ein unerwünschtes Umschalten eines der beiden verbleibenden, bereits im geschlossenen Zustand befindlichen Schaltelemente - etwa 5b, 5c - in den geöffneten Zustand zur Folge hat.

## Patentansprüche

1. Elektronische Schaltungsanordnung (1) zur Verwendung in einem explosionsgefährdeten Bereich, umfassend:
- eine erste und zweite elektrische Versorgungsleitung (2, 2') zum Verbinden eines elektronischen Geräts (4) mit einer wiederaufladbaren Batterie(3), wobei die erste elektrische Versorgungsleitung (2) einenends mit der wiederaufladbaren elektrischen Batterie (3) verbunden ist und anderenends mit dem elektronischen Gerät (4) zur Versorgung mit elektrischer Energie verbindbar oder verbunden ist,
- wenigstens zwei in der ersten elektrischen Versorgungsleitung (2) vorgesehene Schaltelemente (5a, 5b, 5c), welche jeweils zwischen einem geöffneten Zustand, in welchem das jeweilige Schaltelement (5a, 5b, 5c) die erste Versorgungsleitung (2) elektrisch unterbricht, und einem geschlossenen Zustand umschaltbar sind,
- eine Schutz-Schaltungsanordnung (6), welche die wenigstens zwei Schaltelemente (5a, 5b, 5c) bei Auftreten einer Fehlfunktion in der wiederaufladbaren Batterie (3) und/oder im elektronischen Gerät (4) in den geöffneten Zustand umschaltet, so dass der elektrische Stromfluss durch die erste elektrische Versorgungsleitung (2) unterbrochen ist, **dadurch gekennzeichnet, dass**
- die elektronische Schaltungsanordnung (1) eine Reset-Schaltungsanordnung (8) umfasst, welche derart ausgebildet ist, dass sie in einem elektrisch unterbrochenen Zustand der elektrischen ersten Versorgungsleitung (2) bei einem Anschließen des elektronischen Geräts (4) an ein externes Ladegerät (12) die Schaltelemente (5a, 5b, 5c) in den geschlossenen Zustand umschaltet, so dass die elektrische Unterbrechung in der ersten elektrischen Versorgungsleitung (2) wieder aufgehoben ist.

2. Elektronische Schaltungsanordnung nach Anspruch 1,
**dadurch gekennzeichnet, dass**
die Reset-Schaltungsanordnung (8) und die Schutz-Schaltungsanordnung (6) an ein gemeinsames elektrisches Massepotential angeschlossen (26) sind.

3. Elektronische Schaltungsanordnung nach Anspruch 1 oder 2,
**dadurch gekennzeichnet, dass**
- die Schutz-Schaltungsanordnung (6) einen in der ersten elektrischen Versorgungsleitung (2) vorgesehenen elektrischen Stromsensor (7) umfasst, mittels welchem der durch die ersten elektrische Versorgungsleitung (2) fließende elektrische Strom bestimmbar ist,
- die Schutz-Schaltungsanordnung (6) derart mit dem elektrischen Stromsensor (7) und den wenigstens zwei Schaltelementen (5a, 5b, 5c) zusammenwirkt, dass sie bei einem mittels des elektrischen Stromsensors (7) festgestellten Überschreiten eines vorbestimmten elektrischen Schwellstroms die wenigstens zwei Schaltelemente (5a, 5b, 5c) jeweils in den geöffneten Zustand umschaltet, so dass der elektrische Stromfluss durch die erste elektrische Versorgungsleitung unterbrochen (2) ist.

4. Elektronische Schaltungsanordnung nach einem der Ansprüche 1 bis 3,
**dadurch gekennzeichnet, dass**
- die Reset-Schaltungsanordnung (8) eine erste Teil-Schaltungsanordnung (9) umfasst, welche eingangsseitig einen elektrischen Signalanschluss (10) aufweist und ausgangsseitig elektrisch jeweils derart mit den wenigstens zwei Schaltelementen (5a, 5b, 5c) verbunden ist und mit diesen zusammenwirkt, dass sie die wenigstens zwei Schaltelemente (5a, 5b, 5c) bei Anliegen eines Reset-Signals am elektrischen Signalanschluss (10) in den geschlossenen Zustand umschaltet.

5. Elektronische Schaltungsanordnung nach Anspruch 4,
**dadurch gekennzeichnet, dass**
- die Reset-Schaltungsanordnung (8) eine zweite Teil-Schaltungsanordnung (13) umfasst, welche einen Ausgangsanschluss (17) und einen ersten und zweiten Eingangsanschluss (14, 15) aufweist,
- wobei der Ausgangsanschluss (17) der zweiten Teil-Schaltungsanordnung (13) elektrisch mit dem elektrischen Signalanschluss (10) der ersten Teil-Schaltungsanordnung (9) verbunden ist,
- wobei der erste Eingangsanschluss (14), insbesondere über die Schutz-Schaltungsanordnung (6), mit den wenigstens zwei Schaltelementen (5a, 5b, 5c) derart gekoppelt ist, dass am ersten Eingangsanschluss (14) ein erstes Aktivierungssignal bereitgestellt ist, wenn sich wenigstens eines der Schaltelemente (5a, 5b, 5c) im geöffneten Zustand befindet,
- wobei der zweite Eingangsanschluss (15) derart mit der ersten elektrischen Versorgungsleitung (2) gekoppelt ist, dass beim Anschließen des elektronischen Geräts (4) an das externe Ladegerät (12) ein zweites Aktivierungssignal bereitgestellt ist,
- wobei die zweite Teil-Schaltungsanordnung (13) derart ausgebildet ist, dass sie bei Bereitstellung des ersten und zweiten Aktivierungssignals an den beiden Eingangsanschlüssen (14, 15) am Ausgangsanschluss (17) das Reset-Signal erzeugt.

6. Elektronische Schaltungsanordnung nach einem der Ansprüche 3 bis 5,
**dadurch gekennzeichnet, dass**
- die Schutz-Schaltungsanordnung (6) jeweils eine einem jedem Schaltelement (5a, 5b, 5c) zugeordnete, separate Steuerungseinheit (18a, 18b, 18c) umfasst, wobei jede Steuerungseinheit (18a, 18b, 18c) das ihr zugeordnete Schaltelement (5a, 5b, 5c) bei Feststellen des Überschreiten des vorbestimmten Schwellstroms in der ersten elektrischen Versorgungsleitung (2) durch die Schutz-Schaltungsanordnung (6) in den geöffneten Zustand umschaltet,
- die Schutz-Schaltungsanordnung (6) eine Kopplungseinrichtung (19) aufweist, welche die wenigstens zwei Steuerungseinheiten (18a, 18b, 18c) derart miteinander koppelt, dass bei einem Umschalten eines bestimmten Schaltelements (5a, 5b, 5c) in den geöffneten Zustand durch die dem Schaltelement (5a, 5b, 5c) zugeordnete Steuerungseinheit (18a, 18b, 18c) die wenigstens eine verbleibende Steuerungseinheit (18a, 18b, 18c) mittels der Kopplungseinrichtung (19) derart angesteuert wird, dass diese das der wenigstens einen verbleibenden Steuerungseinheit (18a, 18b, 18c) zugeordnete Schaltelement (5a, 5b, 5c) zeitverzögert ebenfalls in den geöffneten Zustand umschaltet.

7. Elektronische Schaltungsanordnung nach Anspruch 5 oder 6,
**dadurch gekennzeichnet, dass**
- die ersten elektrische Versorgungsleitung (2) mittels einer Spannungsteilerschaltung (21) mit einer zweiten Versorgungsleitung (2') der wiederaufladbaren Batterie (3) verbunden ist,
- die Spannungsteilerschaltung(21) eine elektrische Reihenschaltung mit einem ersten und einem zweiten elektrischen Widerstand (22a, 22b) aufweist, wobei zwischen den beiden elektrischen Widerständen (22a, 22b) ein Anschlusselement (24) vorgesehen ist, welches elektrisch mit dem zweiten Eingangsanschluss (15) verbunden ist.

8. Elektronische Schaltungsanordnung nach Anspruch 7,
**dadurch gekennzeichnet, dass**
der erste elektrische Widerstand (22a) 1MOhm und der zweite elektrische Widerstand (22b) 1kOhm beträgt.

9. Elektronische Schaltungsanordnung nach einem der vorhergehenden Ansprüche,
**dadurch gekennzeichnet, dass**
in der ersten elektrischen Versorgungsleitung (2) genau drei elektrisch in Reihe geschaltete Schaltelemente (5a, 5b, 5c) vorgesehen sind.

10. Elektronische Schaltungsanordnung nach einem der vorhergehenden Ansprüche,
**dadurch gekennzeichnet, dass**
die wenigstens zwei Schaltelemente (5a, 5b, 5c) als Feldeffekttransistoren ausgebildet sind, wobei die erste Teil-Schaltungsanordnung (9) zum Umschalten der Feldeffekttransistoren zwischen dem geöffneten und dem geschlossenen Zustand elektrisch jeweils mit einem Gate-Anschluss der Feldeffekttransistoren verbunden ist.

11. Verfahren zum Betreiben eines elektronischen Geräts (4),
- gemäß welchem eine elektronische Schaltungsanordnung (1) mit einer ersten elektrischen Versorgungsleitung (2) zum Verbinden des elektronischen Geräts (4) mit einer wiederaufladbaren Batterie (3) bereitgestellt wird, wobei die ersten elektrische Versorgungsleitung (2) einenends mit der wiederaufladbaren elektrischen Batterie (3) verbunden ist und anderenends mit dem elektronischen Gerät (4) zur Versorgung mit elektrischer Energie verbindbar oder verbunden ist,
- gemäß welchem in der ersten elektrischen Versorgungsleitung (2) wenigstens zwei Schaltelemente (5a, 5b, 5c) vorgesehenen sind, wobei wenigstens eines der Schaltelemente (5a, 5b, 5c) bei Überschreiten eines vorbestimmten elektrischen Schwellstroms in der ersten elektrischen Versorgungsleitung (2) mittels einer Schutz-Schaltungsanordnung (6) in einen geöffneten Zustand umgeschaltet wird, in welchem die erste elektrische Versorgungsleitung (2) unterbrochen ist,
- gemäß welchem mittels einer Reset-Schaltungsanordnung (8) beim Anschließen des elektronischen Geräts an ein externes Ladegerät (12) die Schaltelemente (5a, 5b, 5c) in den geschlossenen Zustand umgeschaltet werden, so dass die elektrische Unterbrechung in der ersten elektrischen Versorgungsleitung (2) wieder aufgehoben ist.

## Claims

1. Electronic circuit assembly (1) for use in a potentially explosive area, comprising
- a first and second electrical supply line (2, 2') for connecting an electronic device (4) to a rechargeable battery (3), wherein the first electrical supply line (2) is connected at one end with the rechargeable electrical battery (3) and at the other end is connectible or connected to the electronic device (4) for supplying it with electrical energy,
- at least two switching elements (5a, 5b, 5c) provided in the first electrical supply line (2), which switching elements can be switched in each case between an open state, in which the respective switching element (5a, 5b, 5c) electrically interrupts the first supply line (2), and a closed state,
- a protective circuit assembly (6) which, at the occurrence of a malfunction in the rechargeable battery (3) and/or in the electronic device (4), switches the at least two switching elements (5a, 5b, 5c) into the open state, such that the flow of electrical current through the first electrical supply line (2) is interrupted,
**characterised in that**
- the electronic circuit assembly (1) comprises a reset circuit assembly (8) which is configured such that, in an electrically interrupted state of the electrical first supply line (2), when the electronic device (4) is connected to an external charging device (12), said reset circuit assembly switches the switching elements (5a, 5b, 5c) into the closed state, such that the electrical interruption in the first electrical supply line (2) is cancelled.

2. Electronic circuit assembly according to claim 1,
**characterised in that**
the reset circuit assembly (8) and the protective circuit assembly (6) are connected (26) to a shared electrical mass potential.

3. Electronic circuit assembly according to claim 1 or 2,
**characterised in that**
- the protective circuit assembly (6) comprises an electrical current sensor (7) provided in the first electrical supply line (2), by means of which electrical current sensor the electrical current can be determined which flows through the first electrical supply line (2),
- the protective circuit assembly (6) interacts with the electrical current sensor (7) and the at least two switching elements (5a, 5b, 5c) such that, in the case that it is determined by means of the electrical current sensor (7) that a predetermined electrical threshold current has been exceeded, it switches the at least two switching elements (5a, 5b, 5c) in each case into the open state, such that the electrical current flow through the first electrical supply line is interrupted (2).

4. Electronic circuit assembly according to any of claims 1 to 3,
**characterised in that**
- the reset circuit assembly (8) comprises a first part-circuit assembly (9), which on the input side has an electrical signal terminal (10) and on the output side is connected electrically in each case with the at least two switching elements (5a, 5b, 5c) and interacts with them such that it switches the at least two switching elements (5a, 5b, 5c) into the closed state when a reset signal is applied to the electrical signal terminal (10).

5. Electronic circuit assembly according to claim 4,
**characterised in that**
- the reset circuit assembly (8) comprises a second part-circuit assembly (13) which has an output terminal (17) and a first and second input terminal (14, 15),
- wherein the output terminal (17) of the second part-circuit assembly (13) is electrically connected with the electrical signal terminal (10) of the first part-circuit assembly (9),
- wherein the first input terminal (14) is coupled with the at least two switching elements (5a, 5b, 5c), particularly via the protective circuit assembly (6), such that at the first input terminal (14) a first activating signal is provided when at least one of the switching elements (5a, 5b, 5c) is in the open state,
- wherein the second input terminal (15) is coupled with the first electrical supply line (2) such that when the electronic device (4) is connected to the external charging device (12), a second activating signal is provided,
- wherein the second part-circuit assembly (13) is configured such that, when the first and second activating signals are provided at the two input terminals (14, 15), it generates the reset signal at the output terminal (17).

6. Electronic circuit assembly according to any of claims 3 to 5,
**characterised in that**
- the protective circuit assembly (6) comprises in each case a separate controlling unit (18a, 18b, 18c) which is assigned to each single switching element (5a, 5b, 5c), wherein each controlling unit (18a, 18b, 18c) switches the switching element (5a, 5b, 5c) assigned to it into the open state, when it is determined by the protective circuit assembly (6) that the predetermined threshold current in the first electrical supply line (2) has been exceeded,
- the protective circuit assembly (6) has a coupling device (19) which couples the at least two controlling units (18a, 18b, 18c) to one another such that, when a specific switching element (5a, 5b, 5c) is switched into the open state by the controlling unit (18a, 18b, 18c) assigned to the switching element (5a, 5b, 5c), the at least one remaining control unit (18a, 18b, 18c) is controlled by means of the coupling device (19) such that this switches also the switching element (5a, 5b, 5c) assigned to the at least one remaining controlling unit (18a, 18b, 18c) in a time-delayed manner into the open state.

7. Electronic circuit assembly according to any of claims 5 or 6,
**characterised in that**
- the first electrical supply line (2) is connected by means of a voltage divider circuit (21) to a second supply line (2') of the rechargeable battery (3),
- the voltage divider circuit (21) has an electric series circuit with a first and a second electrical resistance (22a, 22b), wherein between the two electrical resistances (22a, 22b) is provided a connecting element (24) which is electrically connected to the second input terminal (15).

8. Electronic circuit assembly according to claim 7,
**characterised in that**
the first electrical resistance (22a) is 1 MOhm and the second electrical resistance (22b) is 1 kOhm.

9. Electronic circuit assembly according to any of the preceding claims, **characterised in that**
in the first electrical supply line (2) are provided precisely three switching elements (5a, 5b, 5c) connected electrically in series.

10. Electronic circuit assembly according to any of the preceding claims, **characterised in that**
the at least two switching elements (5a, 5b, 5c) are designed as field effect transistors, wherein the first part-circuit assembly (9), for switching the field effect transistors between the open and the closed state, is electrically connected in each case with a gate connection of the field effect transistors.

11. Method for operating an electronic device (4),
- according to which an electronic circuit assembly (1) is provided having a first electronic supply line (2) for connecting the electronic device (4) with a rechargeable battery (3), wherein the first electrical supply line (2) is at one end connected with the rechargeable electrical battery (3) and is at the other end connectable or connected with the electronic device (4) for supplying it with electrical energy,
- according to which in the first electrical supply line (2) are provided at least two switching elements (5a, 5b, 5c), wherein at least one of the switching elements (5a, 5b, 5c), when a predetermined electrical threshold current in the first electrical supply line (2) is exceeded, is switched by means of a protective circuit assembly (6) into an open state in which the first electrical supply line (2) is interrupted,
- according to which by means of a reset circuit assembly (8), when the electronic device is connected to an external charging device (12), the switching elements (5a, 5b, 5c) are switched into the closed state, such that the electrical interruption in the first electrical supply line (2) is cancelled.

## Revendications

1. Agencement de circuit électronique (1) destiné à être utilisé dans une zone explosible, comprenant :
- une première et une seconde ligne d'alimentation électrique (2, 2') pour connecter un appareil électronique (4) à une batterie rechargeable (3), dans lequel la première ligne d'alimentation électrique (2) est connectée, à une extrémité, à la batterie électrique rechargeable (3), et peut être connectée ou est connectée, à l'autre extrémité, à l'appareil électronique (4) pour alimenter de l'énergie électrique,
- au moins deux éléments de commutation (5a, 5b, 5c) prévus dans la première ligne d'alimentation électrique (2), lesquels peuvent respectivement être commutés entre un état ouvert, dans lequel l'élément de commutation respectif (5a, 5b, 5c) interrompt électriquement la première ligne d'alimentation (2), et un état fermé,
- un agencement de circuit de protection (6), lequel, en cas de dysfonctionnement de la batterie rechargeable (3) et/ou de l'appareil électronique (4), commute les au moins deux éléments de commutation (5a, 5b, 5c) à l'état ouvert, de sorte que le flux de courant électrique à travers la première ligne d'alimentation électrique (2) est interrompu,
**caractérisé en ce que**
- l'agencement de circuit électronique (1) comprend un agencement de circuit de réinitialisation (8), lequel est conçu de sorte que, dans un état électriquement interrompu de la première ligne d'alimentation électrique (2), lorsque l'appareil électronique (4) est connecté à un chargeur externe (12), il commute les éléments de commutation (5a, 5b, 5c) à l'état fermé, de sorte que l'interruption électrique dans la première ligne d'alimentation électrique (2) est de nouveau annulée.

2. Agencement de circuit électronique selon la revendication 1,
**caractérisé en ce que**
l'agencement de circuit de réinitialisation (8) et l'agencement de circuit de protection (6) sont connectés (26) à un potentiel de masse électrique commun.

3. Agencement de circuit électronique selon la revendication 1 ou 2,
**caractérisé en ce que**
- l'agencement de circuit de protection (6) comprend un capteur de courant électrique (7) prévu dans la première ligne d'alimentation électrique (2), au moyen duquel le courant électrique circulant dans la première ligne d'alimentation électrique (2) peut être déterminé,
- l'agencement de circuit de protection (6) coopère avec le capteur de courant électrique (7) et les au moins deux éléments de commutation (5a, 5b, 5c) de sorte que, en cas de dépassement d'un courant de seuil électrique prédéterminé, déterminé au moyen du capteur de courant électrique (7), il commute les au moins deux éléments de commutation (5a, 5b, 5c) respectivement à l'état ouvert, de sorte que le flux de courant électrique à travers la première ligne d'alimentation électrique (2) est interrompu.

4. Agencement de circuit électronique selon l'une quelconque des revendications 1 à 3,
**caractérisé en ce que**
- l'agencement de circuit de réinitialisation (8) comprend un premier agencement de sous-circuit (9), lequel présente une borne de signal électrique (10) côté entrée et est ainsi connecté électriquement respectivement aux au moins deux éléments de commutation (5a, 5b, 5c) côté sortie et coopère avec ceux-ci, de sorte qu'il commute les au moins deux éléments de commutation (5a, 5b, 5c) à l'état fermé lorsqu'un signal de réinitialisation est appliqué à la borne de signal électrique (10).

5. Agencement de circuit électronique selon la revendication 4,
**caractérisé en ce que**
- l'agencement de circuit électronique (8) comprend un second agencement de sous-circuit (13), lequel présente une borne de sortie (17) et une première et seconde borne d'entrée (14, 15),
- dans lequel la borne de sortie (17) du second agencement de sous-circuit (13) est connectée électriquement à la borne de signal électrique (10) du premier agencement de sous-circuit (9),
- dans lequel la première borne d'entrée (14) est couplée, en particulier par l'intermédiaire de l'agencement de circuit de protection (6), aux au moins deux éléments de commutation (5a, 5b, 5c) de sorte qu'un premier signal d'activation est fourni à la première borne d'entrée (14) lorsqu'au moins un des éléments de commutation (5a, 5b, 5c) est à l'état ouvert, dans lequel la seconde borne d'entrée (15) est couplée à la première ligne d'alimentation électrique (2) de sorte qu'un second signal d'activation est fourni lors de la connexion de l'appareil électronique (4) au chargeur externe (12),
- dans lequel le second sous-circuit (13) est conçu de sorte à générer le signal de réinitialisation au niveau de la borne de sortie (17) lorsque le premier et second signal d'activation sont fournis aux deux bornes d'entrée (14, 15).

6. Agencement de circuit électronique selon l'une quelconque des revendications 3 à 5,
**caractérisé en ce que**
- l'agencement de circuit de protection (6) comprend une unité de commande séparée (18a, 18b, 18c) affectée à chaque élément de commutation (5a, 5b, 5c), dans lequel chaque unité de commande (18a, 18b, 18c) commute l'élément de commutation (5a, 5b, 5c) qui lui est affecté à l'état ouvert lorsque l'agencement de agencement de circuit de protection (6) détecte le dépassement du courant de seuil prédéterminé dans la première ligne d'alimentation électrique (2),
- l'agencement de circuit de protection (6) présente un agencement de couplage (19), lequel couple les au moins deux unités de commande (18a, 18b, 18c) l'une à l'autre de sorte que, lors de la commutation d'un élément de commutation déterminé (5a, 5b, 5c) à l'état ouvert par l'unité de commande (18a, 18b, 18c) affectée à l'élément de commutation (5a, 5b, 5c), l'au moins une unité de commande restante (18a, 18b, 18c) est commandée au moyen de l'agencement de couplage (19) de sorte qu'elle commute également l'élément de commutation (5a, 5b, 5c) affecté à l'au moins une unité de commande restante (18a, 18b, 18c) à l'état ouvert avec un retardement.

7. Agencement de circuit électronique selon la revendication 5 ou 6,
**caractérisé en ce que**
- la première ligne d'alimentation électrique (2) est connectée à une seconde ligne d'alimentation (2') de la batterie rechargeable (3) au moyen d'un circuit diviseur de tension (21),
- le circuit diviseur de tension (21) présente un circuit électrique en série avec une première et une seconde résistance électrique (22a, 22b), dans lequel un élément de connexion (24) est prévu entre les deux résistances électriques (22a, 22b), lequel est connecté électriquement à la seconde borne d'entrée (15).

8. Agencement de circuit électronique selon la revendication 7,
**caractérisé en ce que**
la première résistance électrique (22a) est de 1 MOhm et la seconde résistance électrique (22b) est de 1 kOhm.

9. Agencement de circuit électronique selon l'une quelconque des revendications précédentes,
**caractérisé en ce qu'**
exactement trois éléments de commutation (5a, 5b, 5c) connectés électriquement en série sont prévus dans la première ligne d'alimentation électrique (2).

10. Agencement de circuit électronique selon l'une quelconque des revendications précédentes,
**caractérisé en ce que**
les au moins deux éléments de commutation (5a, 5b, 5c) sont conçus en tant que transistors à effet de champ, dans lequel le premier agencement de sous-circuit (9) pour la commutation des transistors à effet de champ entre l'état ouvert et l'état fermé est connecté électriquement respectivement à une borne de grille des transistors à effet de champ.

11. Procédé de fonctionnement d'un appareil électronique (4),
- selon lequel un agencement de circuit électronique (1) est prévu avec une première ligne d'alimentation électrique (2) pour connecter appareil électronique (4) à une batterie rechargeable (3), dans lequel la première ligne d'alimentation électrique (2) est connectée, à une extrémité, à la batterie électrique rechargeable (3), et peut être connectée ou est connectée, à l'autre extrémité, à l'appareil électronique (4) pour alimenter de l'énergie électrique,
- selon lequel au moins deux éléments de commutation (5a, 5b, 5c) sont prévus dans la première ligne d'alimentation électrique (2), dans lequel au moins un des éléments de commutation (5a, 5b, 5c) est commuté au moyen d'un agencement de circuit de protection (6) à un état ouvert dans lequel la première ligne d'alimentation électrique (2) est interrompue lors d'un dépassement du courant de seuil électrique prédéterminé dans la première ligne d'alimentation électrique (2),
- selon lequel, au moyen d'un agencement de circuit de réinitialisation (8), lors de la connexion de l'appareil électronique à un chargeur externe (12), les éléments de commutation (5a, 5b, 5c) sont commutés à l'état fermé, de sorte que l'interruption électrique dans la première ligne d'alimentation électrique (2) est de nouveau annulée.
